# EUROPEAN PATENT SPECIFICATION

(11) **EP 1 473 625 B1**
(45) Date of publication and mention of the grant of the patent: **29.06.2016**
(21) Application number: 04101871.4
(22) Date of filing: 30.04.2004
(51) Int. Cl.: G06F 3/12, G06F 21/60

(54) **Electronic Document Printing Method**
Verfahren um elektronisches Dokument zu drucken
Procédé d'imprimer des documents électroniques

(30) Priority: 30.04.2003 KR 2003027531
(43) Date of publication of application: 03.11.2004
(73) Proprietor: Samsung Electronics Co., Ltd., Suwon-si, Gyeonggi-do, 443-742 (KR); Purun Information & Technology Co., Ltd., Seoul (KR)
(72) Inventor: JANG, Ki-jung, Gwangmyeong-si, Gyeonggi-do (KR); PARK, Joon-cheol, Gwanak-gu, Seoul (KR); KIM, Ji-ha, Yeongdeungpo-gu, Seoul (KR)
(74) Representative: Hewett, Jonathan Michael Richard

(56) References cited:
- EP-A- 1 160 657
- EP-A- 1 191 434
- US-A1- 2002 051 200
- US-A1- 2002 097 431
- US-A1- 2003 011 805
- US-B1- 6 198 542

## Description

The present invention relates to a method of printing an electronic document. Generally, computers are connected through a LAN (local area network) and share a certain number of printers such that the computers can selectively transfer print data to the printers for printing.

When the application program of a certain client executes a printing command, a predetermined printer driver is operated, transmitting print data to a corresponding printer for printing. Accordingly, printing is carried out through the corresponding printer in a predetermined way and the users have no choice in the printing conditions of the printers, such as printing quality and speed.

European patent application EP 1 191 434 A1 describes a system, comprising multiple printers, wherein a virtual printer driver receives a print command and returns performance information of a virtual printer to an application program.

United States patent application US 2002/0097431 A1 describes a printing system comprising a plurality of printers and print restriction information including a printer ID and printing functions usable by a user.

United States patent application US 2002/0051200 A1 describes a system comprising means for obtaining authentication information from an information apparatus to authenticate permission for the information apparatus to access a selected output device.

United States patent US 6,198,542 B1 describes a system and method for outputting documents and figures, comprising a copying apparatus, wherein information is being displayed indicating how many copies are presently set to be copied and of those how many copies have already finished copying, allowing an operator to judge the wait time for the copying apparatus.

United States patent application US 2003/0011805 A1 describes a system and method wherein a virtual printer checks a user's preferences regarding a print job, such as speed versus image quality.

However, the fact is that some printers may have high quality while others do not.

Also, certain printers may be used more frequently than the others. As for the clients, the clients may want higher printing quality rather than speed in some instances and want fast printing rather than good printing quality in other instances. The conventional fixed printing method, however, cannot satisfy these requirements. Additionally, the conventional printing is based on a direct printing method, which requires the use of a driver corresponding to the device in use, and therefore, cannot fully utilize the respective additional features of the printers such as text or image insert or printing multiple copies of a single page.

A method of printing an electronic document, according to the present invention, is characterised by detecting a print request generated by an application program and then storing document data, obtaining operational information regarding a plurality of printers and sending printer control signals for printing said document data to one of said plurality of printers selected on the basis of a decision based on said operational information.

Preferably, selecting the printer to receive said printer control signals is performed on the basis of predetermined criteria.

Preferably the method includes displaying said operational information to a user, receiving a user input command and selecting one of said plurality of printers to receive said printer control signals on the basis of said command.

Preferably, said operational information is provided from a remote apparatus.

Embodiments of the present invention will now be described, by way of example, with reference to the accompanying drawings, in which:
Figure 1 is a block diagram of the overall structure of an embodiment of a printer management and printing control system for printers according to the present invention;
Figure 2 is a block diagram of an embodiment of a client according to the present invention;
Figure 3 is a flowchart illustrating the process of API function interception at a client;
Figure 4 shows an example of printer status information, being displayed on a monitor, under the control of the system controller in Figure 2;
Figure 5 illustrates an embodiment of management and control menus displayed on a monitor of a management server according to the present invention;
Figure 6 is a block diagram of the management server shown in Figure 1; and
Figure 7 is a block diagram of another embodiment of a printer management and a printing control system according to the present invention.

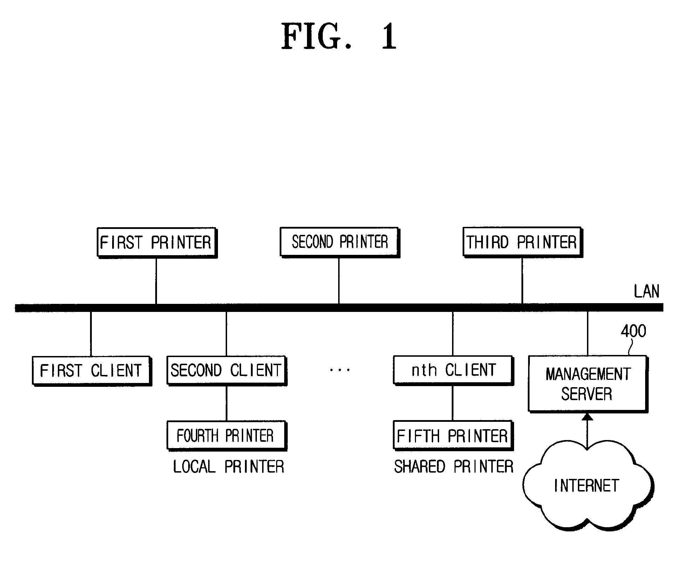

Referring to Figure 1, a certain embodiment of the present invention employs (n) clients, a management server 400 and three network printers connected through a LAN. Each client is connected to its local printer and the management server 400 is connected to the outside via the Internet. Figure 1 depicts the management server 400 being connected to the LAN. However, any adequate alternatives are possible. For example, the management server may be connected via the internet.

Although the present embodiment will be described with respect to a particular example of a network printer, which is connected through a communication network, it is appreciated that the present invention is applicable to a plurality of connected printers, including a local printer connected directly with each client.

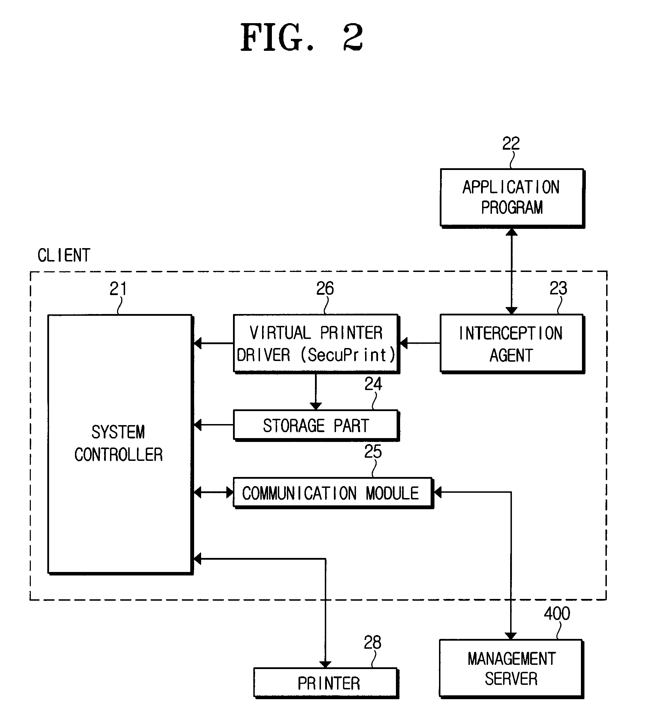

Referring to Figure 2, the client comprises an application program 22 where a printing command is executed. The client further comprises an interception agent 23 and a virtual printer driver 26, such as a SecuPrint. The interception agent 23 resides in the system, is always operated in the system and is not deletable by the user at his/her disposal. The interception agent 23 intercepts the API function call of all GDIs generated during printing, thereby permitting only the virtual printer driver 26 to perform printing. The virtual printer driver 26 communicates with the GDI of the system controller 21 to store data in a storage part 24 in a device-independent metafile.

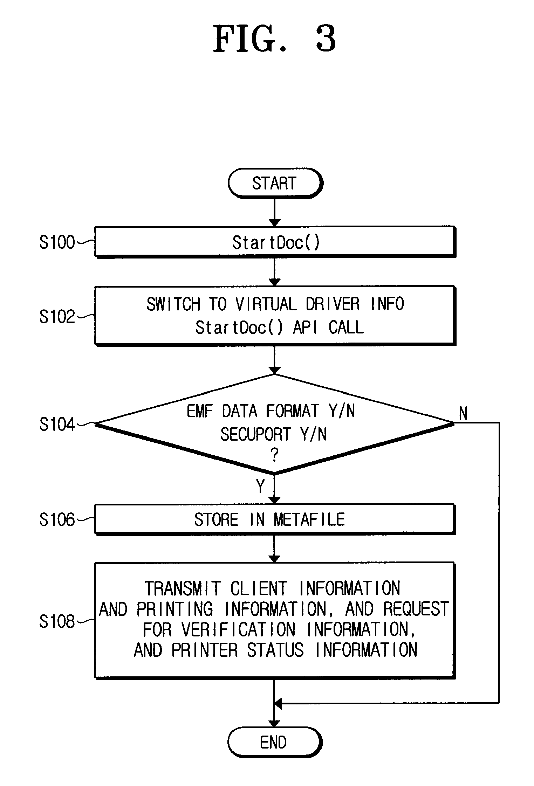

Referring to Figure 3, in operations S100 and S102, the interception agent 23 intercepts the printing command `StartDoc()' from the application program 22 to drive the virtual printer driver (SecuPrint) 26. The virtual printer driver (SecuPrint) 26 converts print data into a metafile and stores the metafile in the storage part 24 in operations S104 and S106 and, if the data cannot be converted to a metafile, ends the operation in operation 104.

In operation S108, the virtual printer driver (SecuPrint) 26 transmits client information, such as the client ID, client name, document information and printer driver information, and printing information, such as the file name and file size, to the management server using a communication module 25. Furthermore, the virtual printer driver (SecuPrint) 26 requests the management server 400 for the verification and status information of the printers, for the output of print data.

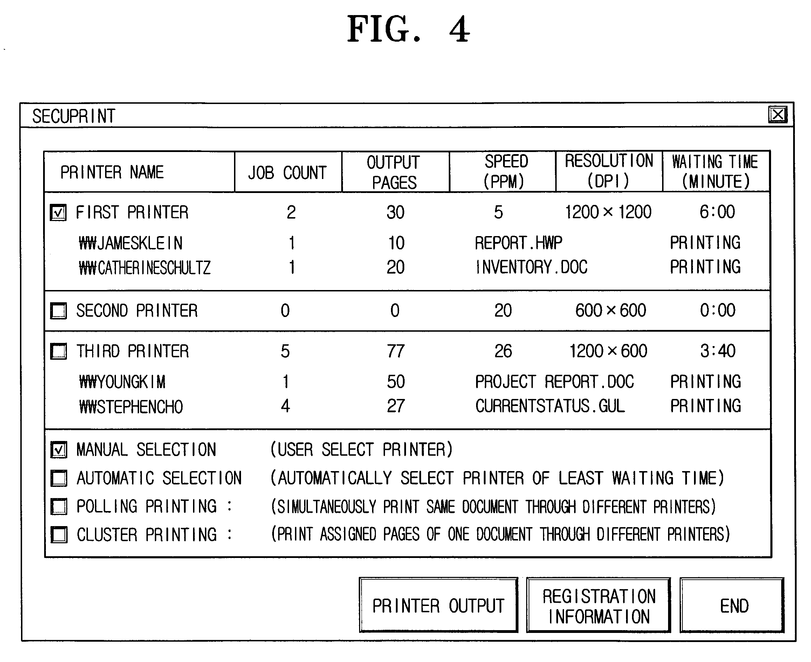

When the verification and the status information of the printer are received from the management server 400 by the system controller 21, the system controller 21 outputs the status information through a monitor (not shown), for instance as shown in Figure 4. The application program 22, the interception agent 23, the storage part 24, the communication module 25 and the monitor (not shown), are all operated under the control of the system controller 21. Meanwhile, during the verification from the management server 400, the system controller 21 may additionally output special information, which was not included in the printing request from the application program for the original document. The additional information may be expressed in various ways, such as a text insert, an identification pattern for preventing unauthorized reproduction or a bar code containing printing information. The text insert may comprise the name of the person who printed the document, the date of printing, the printer used or a security mark for verification. An identification pattern may be configured such that it changes forms when reproduced unduly. The bar code contains printing information so that it provides detailed information about the printing when read.

Referring to Figure 4, the printer status information comprises a job count waiting at a first, a second and a third printer, all of which are connected through a network, a number of pages for printout, a printing speed, a printing resolution, a waiting time and a file name. Figure 4 specifically shows the case where two print jobs are waiting for the first printer, which has a slower printing speed than the other printers, but has a higher printing resolution. The first printer also shows a relatively longer waiting time when compared to the other printers. The second printer has a fast printing speed, but a relatively low printing resolution and, because there is no current printing job waiting, indicates zero waiting time. The third printer is intermediate in printing speed, resolution and waiting time.

When a printing command is received from a client during the execution of the application program, the virtual printer driver (SecuPrint) 26 is executed by the interception agent 23 and the system controller 21 displays on the monitor the status information of the printer, which is received from the management server 400. Accordingly, the user of the client selects optimum printing conditions by, for example, manual selection, automatic selection, cluster printing or polling printing, with various factors such as printing quality of the original document and printing speed being considered. For example, with the status information of the printer received from the management server 400 as shown in Figure 3, the user who is more concerned about printing quality can select the first printer using the manual selection, the user who cares more about printing speed can select the second printer using the manual selection and the user who cares more about printing speed and waiting time can select the third printer using the manual selection. The user may have the printer having the least printing time automatically selected using the automatic selection or have the print data of one document printed through a plurality of printers by the polling printing. The cluster printing provides fast printing, by assigning each printer with a printing job suitable for their capabilities. For example, in printing out 1000 pages, pages from 1 to 200 can be printed using a 10PPM printer, pages from 201 to 400 using a 20PPM printer and pages from 401 to 1000 using a 50PPM printer.

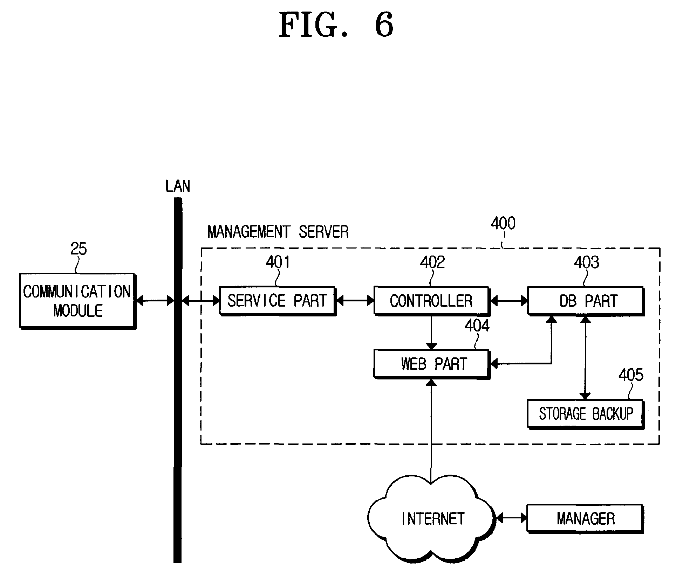

Referring to Figure 6, the management server 400 comprises a service part 401, a control part 402, a database (DB) part 403, a web part 404 and a storage backup part 405.

The service part 401 interfaces transmission and reception of data between the printers of the communication network (LAN) and the clients, and is provided with a protection module which prevents break-in by malicious hackers. The DB part 403 stores therein client information, printing information, printer information, printer status information and security information. The client information comprises serial numbers, IPs and the names of the clients, the printing information comprises the file name of print data requested by the clients, the file size and the file type and the printer information comprises printing resolution and speed. The printer status information comprises a printing job and waiting time, and the security information comprises files allowing limited access and one that gives authority to print the files. The web part 404 is connected with an external internet, enabling an external administrator to view the data and control printing through the internet.

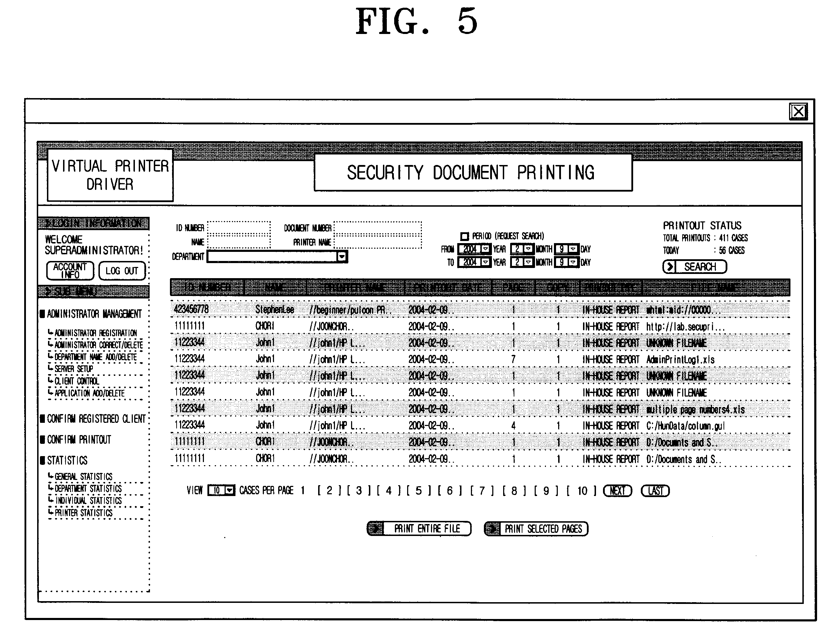

The service part 401, the web part 404 and the DB part 403 are all operated under the control of the control part 402. The control part 402 determines whether to print or not based on the comparison of the printing information and the client information of the service part 401, such as the serial number, IP, client name and file name, with those of the DB part 403 and, if printing is allowed, reads out the current status information of the printers from the DB part 403 and transmits the read information to the client. At this time, a menu screen as shown in Figure 5 is displayed on the monitor of the management server 400 for the management and control of the printers. The menu screen can also be provided to remote systems via the internet, through the web part 404. Accordingly, an external administrator can also manage and control the printers from a remote place.

Meanwhile, if the management server 400 permits printing, by the system controller 21 of the client, the printer information and the current status information of the printer are displayed on the monitor of the client (see Figure 4). If the user of the client responds to the use of a printer, the system controller 21 transmits the printer use information of the printer to the management server 400 via the communication module 25. The controller 402 of the management server 400 selectively stores the printer use information transmitted from the client in the DB part 403, and transmits control commands to the printer and the client to operate the printer according to the printer use information. When the control commands are received, the system controller 21 of the client operates the printer driver 26 to read out and transmit the metafile of the storage part 24 to the printer, so that the printer can perform printing.

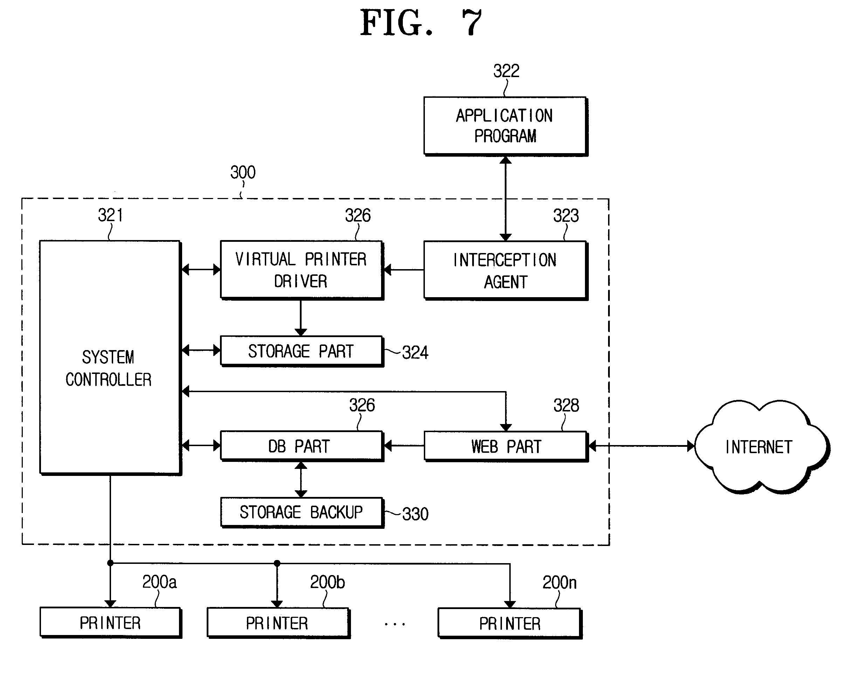

Referring to Figure 7, a printer 200 is connected to one client 300. The client 300 is installed with a variety of application programs 322 and comprises an interception agent 323, a virtual printer driver 326, a system controller 321, a database (DB) part 326, a web part 328 and a storage backup 330.

The operations of the interception agent 323, the virtual printer driver 326, the system controller 321, the DB part 326, the web part 328 and the storage backup 330 are substantially identical to those of the corresponding elements in the first embodiment of the present invention and, therefore, description thereof will be omitted and the main difference of this embodiment will be focused upon. The main difference of this embodiment from the first embodiment lies in the fact that the operation of the management server can be processed within the client 300. More specifically, the system controller 321 divides and stores the printing information, which is transmitted from the virtual printer driver 326, with the print request in the DB part 326, compares the printing information with the printing information stored in the DB part 326 and accordingly determines whether to permit the printing or not. When the system controller 321 permits the printing, the printer information and current status information are read out from the DB part 328 and displayed on the monitor (see Figure 4). Additionally, special information, which does not exist in the original document requested by the application program 322, can also be output. The special information may comprise the ones described above in the first embodiment.

As described above in a printing management system comprising a plurality of clients, a server and a plurality of printers all connected through a communication line, in which each client receives status information of the printers and selectively has print data printed using a printer with desired conditions, speed and resolution is provided.

Additionally, according to the settings of the management server, a variety of information can be inserted in the printed documents, regardless of the contents of the original print data. For example, identification information to prevent unauthorized copying is provided or a bar code can be inserted in the printed documents so that documents can be handled electronically. Furthermore, special features of the printer, such as image insert or printing multiple copies of a single page, can be supported, enabling printing of document in various forms.

Moreover, the management server can control partial, or overall printing operations with respect to the clients, so that unauthorized access to the documents can be prevented.

It is appreciated that the above-described methods may be implemented by a program being executed by a computer. It is also appreciated that a signal for programming a computer to perform the above-described method may be read from a data carrier or downloaded from a network.

## Claims

1. A method of printing an electronic document, comprising:
detecting a print request generated by an application program (22) and then storing document data;
obtaining status information of a plurality of printers from a management server (400);
displaying said status information to a user;
receiving a user input command;
**characterized by**
selecting one of said plurality of printers to receive print control signals to print the electronic document on the basis of the status information, according to said user input command; and
sending printer control signals for printing said document data to the selected printer
wherein the status information comprises a wait time of the plurality of printers.

2. A method according to claim 1, wherein selecting the printer to receive said printer control signals is performed on the basis of predetermined criteria.

3. A method according to any preceding claim wherein said status information is provided from a remote apparatus.

4. A computer programmed to perform a method according to any preceding claim.

5. A signal representing a computer program for programming a computer to provide a computer according to claim 4.

6. A data carrier having a signal according to claim 5 recorded therein or thereon.

7. A printer management and a printing control system comprising;
a plurality of printers;
a client; and
a server (400) connected directly to the client and the plurality of printers through a network,
wherein, if there is a printing request from the client, the server determines whether to permit the printing request according to information received from the client, and if the printing request is permissible, the server transmits print permission information including printer information
**characterized in that**
said print permission information further includes the status of the plurality of printers,
and the client comprises:
a virtual printer driver to convert print data sent from an application program (22) into a metafile, to store the metafile, and to request a printing of the stored metafile,
an interception agent to drive the virtual printer driver, by intercepting a print command, including the print data sent from the application program, and
a system controller, upon the printing request of the virtual printer driver, to transmit printing information including client information to the server, to request the server to transmit printer information and status information of the plurality of printers, to receive print permission information including the printer information and the status information of the plurality of printers and to indicate the printer information and the status information according to a predetermined format, and to transmit the stored metafile to a printer selected from the plurality of printers based on the printer information and the status information of the plurality of printers,
wherein the status information comprises a wait time of the plurality of printers.

8. The printer management and printing control system of claim 7, wherein the server comprises:
a service part to interface data transmission and reception with at least one client and the plurality of printers;
a database part to store therein the client information, the printer information and the status information of the plurality of printers, and a printing information sent from the clients; and
a controller to determine whether to permit the printing request of the clients, and at the same time, to read out from the database part the printer information and the status information of the plurality of printers, and to transmit the read information to the clients.

9. The printer management and printing control system of claim 7, wherein the printer information and the status information of the plurality of printers are displayed in accordance with the predetermined format, one printer among the plurality of printers is selected through the printer information and the status information displayed and the system controller controls such that the stored metafile is transferred to the selected printer to print.

10. The printer management and printing control system of claim 7, wherein the interception agent intercepts APIs (Application Program Interfaces) of GDIs (Graphic Device Interfaces) detected during the printing request of the application program, and transmits the intercepted information to the virtual printer driver.

11. The printer management and printing control system of claim 7, wherein the print permission information sent from the server comprises certain data designated by the server.

12. The printer management and printing control system of claim 11, wherein the certain data comprises one of: an identification pattern insert to prevent unauthorized printing, a barcode insert for the handling of printouts, and a special text insert.

13. The printer management and printing control system of claim 11 or claim 12, wherein a form of an identification pattern is changed when a printout document bearing the identification pattern is copied, so as to indicate non-authenticity of the copied document.

## Patentansprüche

1. Verfahren zum Drucken eines elektronischen Dokuments, umfassend:
Erfassen einer von einem Anwendungsprogramm (22) erzeugten Druckanforderung und dann
Speichern von Dokumentdaten;
Erhalten von Statusinformationen einer Vielzahl von Druckern von einem Verwaltungsserver (400);
einem Benutzer die Statusinformationen anzeigen;
Empfangen eines Benutzereingabebefehls;
**gekennzeichnet durch**:
Auswählen, anhand der Statusinformationen, gemäß dem Benutzereingabebefehl, von einem der Vielzahl von Druckern, um Drucksteuerungssignale zu empfangen, um das elektronische Dokument zu drucken; und
Senden von Druckersteuerungssignalen zum Drucken der Dokumentdaten zu dem ausgewählten Drucker,
wobei die Statusinformationen eine Wartezeit der Vielzahl von Druckern umfassen.

2. Verfahren nach Anspruch 1, wobei das Auswählen des Druckers zum Empfangen der Druckersteuerungssignale anhand vorherbestimmter Kriterien ausgeführt wird.

3. Verfahren nach einem der vorangehenden Ansprüche, wobei die Statusinformationen von einer entfernten Vorrichtung bereitgestellt werden.

4. Computer, der dazu programmiert ist, ein Verfahren nach einem der vorangehenden Ansprüche auszuführen.

5. Signal, das ein Computerprogramm repräsentiert, um einen Computer zu programmieren, um einen Computer nach Anspruch 4 bereitzustellen.

6. Datenträger, auf oder in dem ein Signal nach Anspruch 5 aufgezeichnet ist.

7. Druckerverwaltungs- und Drucksteuerungssystem, umfassend:
eine Vielzahl von Druckern;
einen Client, und
einen Server (400), der über ein Netzwerk direkt mit dem Client und der Vielzahl von Druckern verbunden ist,
wobei, wenn eine Druckanforderung von dem Client vorliegt, der Server bestimmt, ob die Druckanforderung gemäß den von dem Client empfangenen Informationen genehmigt werden soll und, wenn die Druckanforderung zulässig ist, der Server Druckerinformationen umfassende Druckgenehmigungsinformationen überträgt,
**dadurch gekennzeichnet, dass**
die Druckgenehmigungsinformationen weiter den Status der Vielzahl von Druckern umfassen,
und der Client Folgendes umfasst:
einen virtuellen Druckertreiber zum Umwandeln von von einem Anwendungsprogramm (22) gesendeten Druckdaten in eine Metadatei, zum Speichern der Metadatei und zum Anfordern eines Druckens der gespeicherten Metadatei,
einen Abfangagenten zum Treiben des virtuellen Druckertreibers durch Abfangen eines die von dem Anwendungsprogramm gesendeten Druckdaten umfassenden Druckbefehls, und
einen Systemkontroller zum Übertragen, auf die Druckanforderung des virtuellen Druckertreibers hin, von Clientinformationen umfassenden Druckinformationen an den Server, um den Server aufzufordern, Druckerinformationen und Statusinformationen der Vielzahl von Druckern zu übertragen, die Druckerinformationen und die Statusinformationen der Vielzahl von Druckern umfassende Druckgenehmigungsinformationen zu empfangen und die Druckerinformationen und die Statusinformationen gemäß einem vorherbestimmten Format anzugeben und die gespeicherte Metadatei an einen anhand der Druckerinformationen und der Statusinformationen der Vielzahl von Druckern aus der Vielzahl von Druckern ausgewählten Drucker zu übertragen,
wobei die Statusinformationen eine Wartezeit der Vielzahl von Druckern umfassen.

8. Druckerverwaltungs- und Drucksteuerungssystem nach Anspruch 7, wobei der Server Folgendes umfasst:
einen Dienstteil zum Koppeln von Datenübertragung und -empfang mit mindestens einem Client und der Vielzahl von Druckern;
einen Datenbankteil zum Speichern der Clientinformationen, der Druckerinformationen und der Statusinformationen der Vielzahl von Druckern und einer von den Clients gesendeten Druckinformation darin; und
einen Kontroller zum Bestimmen, ob die Druckanforderung der Clients genehmigt werden soll, und zum gleichzeitigen Auslesen der Druckerinformationen und der Statusinformationen der Vielzahl von Druckern aus dem Datenbankteil und zum Übertragen der gelesenen Informationen an die Clients.

9. Druckerverwaltungs- und Drucksteuerungssystem nach Anspruch 7, wobei die Druckerinformationen und die Statusinformationen der Vielzahl von Druckern gemäß dem vorherbestimmten Format angezeigt werden, ein Drucker aus der Vielzahl von Druckern durch die angezeigten Druckerinformationen und Statusinformationen ausgewählt wird und der Systemkontroller derart steuert, dass die gespeicherte Metadatei zum Drucken an den ausgewählten Drucker übertragen wird.

10. Druckerverwaltungs- und Drucksteuerungssystem nach Anspruch 7, wobei der Abfangagent APIs (Application Program Interfaces) von GDIs (Graphic Device Interfaces) abfängt, die während der Druckanforderung des Anwendungsprogramms erfasst wurden und die abgefangenen Informationen an den virtuellen Druckertreiber überträgt.

11. Druckerverwaltungs- und Drucksteuerungssystem nach Anspruch 7, wobei die von dem Server gesendeten Druckgenehmigungsinformationen gewisse, von dem Server ausgewiesene Daten umfasst.

12. Druckerverwaltungs- und Drucksteuerungssystem nach Anspruch 11, wobei die gewissen Daten eines der Folgenden umfassen: eine Identifikationsmustereinfügung zum Verhindern von nicht autorisiertem Drucken, eine Strichcodeeinfügung zum Handhaben von Ausdrucken und eine Sondertexteinfügung.

13. Druckerverwaltungs- und Drucksteuerungssystem nach Anspruch 11 oder Anspruch 12, wobei eine Form eines Identifikationsmusters geändert wird, wenn ein das Identifikationsmuster tragendes Ausdruckdokument kopiert wird, um die Inauthentizität des kopierten Dokuments anzugeben.

## Revendications

1. Procédé d'impression d'un document électronique, comportent :
l'étape consistant à détecter une demande d'impression générée par un programme d'application (22) et ensuite l'étape consistant à stocker des données de document ;
l'étape consistant à obtenir des informations se rapportant au statut d'une pluralité d'imprimantes en provenance d'un serveur de gestion (400) ;
l'étape consistant à afficher lesdites informations se rapportant au statut à l'attention d'un utilisateur ;
l'étape consistant à recevoir une commande d'entrée d'utilisateur ;
**caractérisé par**
l'étape consistant à sélectionner l'une de ladite pluralité d'imprimantes pour recevoir des signaux de commande d'impression à des fins d'impression du document électronique d'après les informations se rapportant au statut, en fonction de ladite commande d'entrée d'utilisateur ; et
l'étape consistant à envoyer des signaux de commande d'imprimante à des fins d'impression desdites données de document à l'imprimante sélectionnée
dans lequel les informations se rapportant au statut comportent un temps d'attente de la pluralité d'imprimantes.

2. Procédé selon la revendication 1, dans lequel l'étape consistant à sélectionner l'imprimante pour recevoir lesdits signaux de commande d'imprimante est effectuée d'après des critères prédéterminés.

3. Procédé selon l'une quelconque des revendications précédentes, dans lequel lesdites informations se rapportant au statut sont fournies en provenance d'un appareil à distance.

4. Ordinateur programmé à des fins d'exécution d'un procédé selon l'une quelconque des revendications précédentes.

5. Signal représentant un programme informatique servant à programmer un ordinateur à des fins de mise en oeuvre d'un ordinateur selon la revendication 4.

6. Support de données ayant un signal selon la revendication 5 enregistré dans celui-ci ou sur celui-ci.

7. Système de gestion des imprimantes et de commande de l'impression comportant :
une pluralité d'imprimantes ;
un client ; et
un serveur (400) connecté directement au client et à la pluralité d'imprimantes par l'intermédiaire d'un réseau,
dans lequel, s'il y a une demande d'impression en provenance du client, le serveur détermine s'il faut ou non autoriser la demande d'impression en fonction des informations reçues en provenance du client, et si la demande d'impression est autorisée, le serveur émet les informations d'autorisation d'impression comprenant des informations se rapportant aux imprimantes,
**caractérisé en ce que**
lesdites informations d'autorisation d'impression comprennent par ailleurs le statut de la pluralité d'imprimantes,
et le client comporte :
un pilote d'imprimante virtuel servant à convertir les données d'impression envoyées en provenance d'un programme d'application (22) en un métafichier, servant à stocker le métafichier, et servant à demander une impression du métafichier stocké,
un agent d'interception servant à piloter le pilote d'imprimante virtuel, en interceptant une commande d'impression, comprenant les données d'impression envoyées en provenance du programme d'application, et
un dispositif de commande de système, dès la demande d'impression du pilote d'imprimante virtuel, servant à émettre les informations d'impression comprenant les informations se rapportant aux clients à l'attention du serveur, servant à demander au serveur d'émettre les informations se rapportant aux imprimantes et les informations se rapportant au statut de la pluralité d'imprimantes, servant à recevoir les informations d'autorisation d'impression comprenant les informations se rapportant aux imprimantes et les informations se rapportant au statut de la pluralité d'imprimantes et servant à indiquer les informations se rapportant aux imprimantes et les informations se rapportant au statut en fonction d'un format prédéterminé, et servant à émettre le métafichier stocké à une imprimante sélectionnée parmi la pluralité d'imprimantes en fonction des informations se rapportant aux imprimantes et des informations se rapportant au statut de la pluralité d'imprimantes,
dans lequel les informations se rapportant au statut comportent un temps d'attente de la pluralité d'imprimantes.

8. Système de gestion des imprimantes et de commande de l'impression selon la revendication 7, dans lequel le serveur comporte :
une partie service servant à assurer l'interface d'émission et de réception de données avec au moins un client et la pluralité d'imprimantes ;
une partie base de données servant à stocker dans celle-ci les informations se rapportant aux clients, les informations se rapportant aux imprimantes et les informations se rapportant au statut de la pluralité d'imprimantes, et des informations d'impression envoyées en provenance des clients ; et
un dispositif de commande servant à déterminer s'il faut au non autoriser la demande d'impression des clients, et en même temps, servant à lire dans la partie base de données les informations se rapportant aux imprimantes et les informations se rapportant au statut de la pluralité d'imprimantes, et servant à émettre les informations lues aux clients.

9. Système de gestion des imprimantes et de commande de l'impression selon la revendication 7, dans lequel les informations se rapportant aux imprimantes et les informations se rapportant au statut de la pluralité d'imprimantes sont affichées en fonction du format prédéterminé, une imprimante parmi la pluralité d'imprimantes est sélectionnée au moyen des informations se rapportant aux imprimantes et des informations se rapportant au statut qui sont affichées et le dispositif de commande de système commande de telle sorte que le métafichier stocké est transféré à l'imprimante sélectionnée à des fins d'impression.

10. Système de gestion des imprimantes et de commande de l'impression selon la revendication 7, dans lequel l'agent d'interception intercepte des API (application program interfaces - interfaces de programmes d'application) de GDI (graphie device interfaces - interfaces de dispositifs graphiques) détectés au cours de la demande d'impression du programme d'application, et émet les informations interceptées au pilote d'imprimante virtuel.

11. Système de gestion des imprimantes et de commande de l'impression selon la revendication 7, dans lequel les informations d'autorisation d'impression envoyées en provenance du serveur comportent certaines données désignées par le serveur.

12. Système de gestion des imprimantes et de commande de l'impression selon la revendication 11, dans lequel lesdites certaines données comportent l'une parmi : une insertion de modèle d'identification servant à empêcher toute impression non autorisée, une insertion de code à barres servant à la manipulation des sorties imprimées, et une insertion de texte spécial.

13. Système de gestion des imprimantes et de commande de l'impression selon la revendication 11 ou la revendication 12, dans lequel une forme d'un modèle d'identification est changée quand un document imprimé portant le modèle d'identification est copié, de manière à indiquer une non-authenticité du document copié.
